# EUROPÄISCHE PATENTANMELDUNG

(11) **EP 3 895 932 A1**
(43) Veröffentlichungstag der Anmeldung: **20.10.2021**
(21) Anmeldenummer: 21168559.9
(22) Anmeldetag: 15.04.2021
(51) Int. Cl.: B60L 53/57, B60L 53/53

(54) **MOBILES ENERGIESYSTEM**

(30) Priorität: 17.04.2020 DE 102020204917
(71) Anmelder: Dürr Systems AG, 74321 Bietigheim-Bissingen (DE)
(72) Erfinder: Frasch, Benny, 71282 Hemmingen (DE)
(74) Vertreter: Hoeger, Stellrecht & Partner Patentanwälte mbB

(57) **Zusammenfassung**

Um ein mobiles Energiesystem bereitzustellen, welches flexibel einsetzbar ist und ein möglichst effizientes Laden und/oder Entladen eines Energiespeichers ermöglicht, wird vorgeschlagen, dass das mobile Energiesystem eine Energiespeichervorrichtung zum Speichern und/oder Bereitstellen von elektrischer Energie und/oder eine Entladevorrichtung zum Entladen eines Energiespeichers eines Fahrzeugs umfasst.

## Beschreibung

Die vorliegende Erfindung betrifft ein mobiles Energiesystem zum Laden und/oder Entladen eines Energiespeichers eines Fahrzeugs.

Der vorliegenden Erfindung liegt die Aufgabe zugrunde, ein mobiles Energiesystem bereitzustellen, welches flexibel einsetzbar ist und ein möglichst effizientes Laden und/oder Entladen eines Energiespeichers ermöglicht.

Diese Aufgabe wird erfindungsgemäß durch ein mobiles Energiesystem gemäß Anspruch 1 gelöst.

Das mobile Energiesystem zum Laden und/oder Entladen eines Energiespeichers eines Fahrzeugs umfasst eine Energiespeichervorrichtung zum Speichern und/oder Bereitstellen von elektrischer Energie. Ergänzend oder alternativ umfasst das mobile Energiesystem eine Entladevorrichtung zum Entladen des Energiespeichers des Fahrzeugs.

Beispielsweise ist das mobile Energiesystem ein mobiles Ladesystem und/oder ein mobiles Ladegerät.

Das Fahrzeug ist vorzugsweise ein Transportfahrzeug zum Transportieren von Gegenständen und/oder ein fahrerloses Fahrzeug.

Vorzugsweise umfasst der Energiespeicher des Fahrzeugs eine oder mehrere Energiespeichereinheiten, welche als Kondensator, insbesondere als Superkondensator oder Ultrakondensator, ausgebildet sind.

Günstig kann es sein, wenn der Energiespeicher eine oder mehrere Niedrigvoltenergiespeichereinheiten und eine oder mehrere Hochvoltenergiespeichereinheiten umfasst, welche bei unterschiedlichen Normbetriebsspannungen und/oder Ladespannungen betreibbar sind.

Die Energiespeichervorrichtung umfasst vorzugsweise einen oder mehrere Akkumulatoren oder ist daraus gebildet.

Vorzugsweise ist die Energiespeichervorrichtung zum Laden mittels eines Ladekabels mit einer Stromquelle und/oder Spannungsquelle elektrisch leitend verbindbar und/oder verbunden.

Die Entladevorrichtung des mobilen Energiesystems ist vorzugsweise an und/oder in einem Gehäuse des mobilen Energiesystems angeordnet. So ist das mobile Energiesystem insbesondere als kompakte Einheit verfahrbar.

Vorteilhaft kann es sein, wenn die Entladevorrichtung als separates Element ausgebildet ist.

Ergänzend oder alternativ zu einer separaten Ausbildung der Entladevorrichtung bildet die Entladevorrichtung beispielsweise einen Bestandteil der Energiespeichervorrichtung oder ist von der Energiespeichervorrichtung gebildet.

Beispielsweise ist der Energiespeicher des Fahrzeugs durch eine Abgabe von Energie an die Energiespeichervorrichtung und/oder an die Entladevorrichtung entladbar.

In Ausführungsformen, in welchen eine Entladevorrichtung vorgesehen ist, kann der Energiespeicher bei Bedarf, beispielsweise, wenn Wartungsarbeiten und/oder Reparaturarbeiten an dem Energiespeicher notwendig sind, entladen werden und/oder ist entladbar. Nach der Entladung können Wartungsarbeiten und/oder Reparaturarbeiten an dem Energiespeicher gefahrlos durchgeführt werden. Beispielsweise können in einem entladenen Zustand des Energiespeichers einzelne Kondensatoren aus dem Energiespeicher ausgebaut werden. Ferner kann eine Entladung des Energiespeichers, insbesondere der Kondensatoren, für einen Transport des Fahrzeugs vorteilhaft oder erforderlich sein.

Durch eine Integration der Entladungsvorrichtung in das mobile Energiesystem kann die Entladevorrichtung gemeinsam mit anderen Bestandteilen des mobilen Energiesystems gelagert und/oder transportiert werden.

Die Entladevorrichtung kann beispielsweise einen Ableitwiderstand und/oder einen Bleeder Resistor und/oder einen Bremswiderstand umfassen. Mittels der Entladevorrichtung kann insbesondere im Energiespeicher des Fahrzeugs enthaltene elektrische Energie in Wärme umgewandelt oder anderweitig abgeführt werden.

Günstig kann es sein, wenn die Entladevorrichtung eine Steuervorrichtung umfasst, mittels welcher ein Entladevorgang steuerbar ist, insbesondere hinsichtlich eines zeitlichen Verlaufs einer Entladestromstärke.

Die Steuervorrichtung ist vorzugsweise derart ausgebildet und eingerichtet, dass ein zeitlicher Verlauf einer Entladestromstärke steuerbar und/oder regelbar ist.

Vorzugsweise sind mittels der Steuervorrichtung ein oder mehrere Entlademodi durchführbar.

Als Entladungsmodus kann beispielsweise ein Normalmodus vorgesehen sein, in welchem die in dem Energiespeicher enthaltene elektrische Energie über einen Widerstand mit zumindest näherungsweise konstantem Widerstandswert abgeleitet und/oder umgewandelt wird.

Ein solcher Normalmodus kann aufgrund der mit zunehmendem Entladungsgrad abnehmenden Entladespannung zu einer vergleichsweise langen Entladedauer führen.

Alternativ oder ergänzend hierzu kann als Entladungsmodus vorzugsweise ein Schnellmodus vorgesehen sein, in welchem eine Entladestromstärke und/oder eine Entladespannung mittels der Steuervorrichtung während des Entladens beeinflusst, insbesondere zumindest abschnittsweise (zeitweise) konstant gehalten, wird.

Vorzugsweise ist vorgesehen, dass im Schnellmodus die Entladestromstärke und/oder die Entladespannung mittels der Steuervorrichtung während des Entladens über mindestens ungefähr 50 %, insbesondere über mindestens ungefähr 80 %, einer gesamten Entladedauer zumindest näherungsweise konstant gehalten wird.

Die Begriffe "ungefähr" und "näherungsweise" bezeichnen dabei beispielsweise Abweichungen von höchstens 20%, insbesondere höchstens 10%, vorzugsweise höchstens 5%, der angegebenen oder vorliegenden oder gemessenen oder zu messenden Werte.

Vorteilhaft kann es sein, wenn im Schnellmodus eine maximale Entladestromstärke zu Beginn eines Entladevorgangs mittels der Steuervorrichtung eingestellt wird oder einstellbar ist, insbesondere auf einen Wert, welcher unterhalb und/oder zumindest näherungsweise bei einem Auslegungsmaximum einer Entladestromstärke einer oder mehrerer Verbindungsleitungen oder eines oder mehrerer Pins zur Verbindung des Fahrzeugs mit der Entladevorrichtung liegt. Vorzugsweise wird diese maximale Entladestromstärke bis zu einem Entladungsgrad von mindestens 80%, vorzugsweise mindestens 95%, beibehalten.

Eine zumindest näherungsweise konstante Entladestromstärke kann beispielsweise mittels einer elektronischen Schaltung der Entladevorrichtung, insbesondere der Steuervorrichtung, realisiert sein. Alternativ oder ergänzend hierzu kann vorgesehen sein, dass zur Erzielung einer zumindest näherungsweise konstanten Entladestromstärke im Verlauf des Entladevorgangs verschiedene Entladewiderstände angelegt oder angekoppelt oder abgekoppelt werden, insbesondere um mit zunehmendem Entladegrad einen abnehmenden Widerstandswert zu erhalten.

Die Entladevorrichtung umfasst vorzugsweise einen Konstantstromregler und/oder einen Leistungsregler, insbesondere zur zumindest näherungsweisen Konstanthaltung der Entladestromstärke.

Die zumindest abschnittsweise und/oder zumindest näherungsweise konstant gehaltene Entladestromstärke beträgt vorzugsweise zwischen ungefähr 60 A und ungefähr 70 A, insbesondere beträgt diese ungefähr 64 A. Alternativ hierzu kann vorgesehen sein, dass die zumindest abschnittsweise und/oder zumindest näherungsweise konstant gehaltene Entladestromstärke vorzugsweise zwischen ungefähr 28 A und ungefähr 34 A, insbesondere ungefähr 32 A, beträgt. Die genannten Werte sind insbesondere Werte pro Verbindungsleitung und/oder pro Pin oder aber gemeinsame Werte für alle zur Entladung genutzten Verbindungsleitungen und/oder Pins.

Im Vergleich zum Normalmodus kann die Entladedauer im Schnellmodus vorzugsweise um mindestens 30%, insbesondere um mindestens 50%, reduziert werden.

Vorteilhaft kann es sein, wenn das mobile Energiesystem eine mobile Kontaktiereinheit umfasst, mittels welcher die Energiespeichervorrichtung mit dem Energiespeicher des Fahrzeugs elektrisch kontaktierbar ist und/oder kontaktiert wird.

Vorzugsweise weist die mobile Kontaktiereinheit einen oder mehrere Kontaktbereiche und/oder ein oder mehrere Kontaktelemente auf, mittels welcher eine Spannung an den Energiespeicher anlegbar und/oder eine Spannung von dem Energiespeicher abgreifbar ist.

Beispielsweise ist die mobile Kontaktiereinheit eine mobile Ladeplatte oder ein mobiler Ladestecker.

Vorzugsweise ist die mobile Kontaktiereinheit unabhängig von einer Basiseinheit des mobilen Energiesystems bewegbar. Beispielsweise ist die mobile Kontaktiereinheit mittels eines Verbindungskabels mit der Basiseinheit des mobilen Energiesystems verbindbar und/oder verbunden.

Bei einer Ausgestaltung kann vorgesehen sein, dass das Verbindungskabel mehrere Verbindungsleitungen zur Herstellung einer elektrischen Verbindung zwischen der mobilen Kontaktiereinheit und der Basiseinheit des mobilen Energiesystems umfasst. Vorzugsweise sind zwei oder mehr als zwei der Verbindungsleitungen als Entladeleitungen ausgebildet und/oder nutzbar, insbesondere um eine beim Entladen von dem Fahrzeug abzuführende Gleichstromstärke auf mehrere Verbindungsleitungen aufzuteilen.

Beispielsweise kann vorgesehen sein, dass mehrere als 16A-Verbindungsleitungen oder als 32A-Verbindungsleitungen ausgebildete Verbindungsleitungen vorgesehen sind, welche zum Entladen des Energiespeichers zusammenwirken, um im Maximum eine größere Entladestromstärke zu ermöglichen, als mit einer einzigen Verbindungsleitung möglich wäre.

Die Basiseinheit des mobilen Energiesystems umfasst vorzugsweise ein Gehäuse des mobilen Energiesystems und/oder eine Gestellvorrichtung des mobilen Energiesystems.

Vorteilhaft kann es sein, wenn die Energiespeichervorrichtung und/oder die Entladevorrichtung einen Bestandteil der Basiseinheit bilden.

Günstig kann es sein, wenn die mobile Kontaktiereinheit eine Bodenplatte, insbesondere zur Auflage auf einem Hallenboden und/oder Fußboden, umfasst oder daraus gebildet ist.

Ergänzend oder alternativ kann vorgesehen sein, dass die mobile Kontaktiereinheit ein Steckerelement umfasst oder daraus gebildet ist.

Bei einer Ausgestaltung kann vorgesehen sein, dass das Steckerelement mehrere Verbindungsleitungen und/oder Pins zur Herstellung einer elektrischen Verbindung zwischen dem Fahrzeug und dem Verbindungskabel und/oder der Basiseinheit des mobilen Energiesystems umfasst. Vorzugsweise sind zwei oder mehr als zwei der Verbindungsleitungen und/oder Pins als Entladeleitungen oder Entladepins ausgebildet und/oder nutzbar, insbesondere um eine beim Entladen von dem Fahrzeug abzuführende Gleichstromstärke auf mehrere Verbindungsleitungen und/oder Pins aufzuteilen.

Beispielsweise kann vorgesehen sein, dass mehrere als 16A-Verbindungsleitungen oder als 32A-Verbindungsleitungen ausgebildete Verbindungsleitungen und/oder mehrere als 16A-Pins oder als 32A-Pins ausgebildete Pins vorgesehen sind, welche zum Entladen des Energiespeichers zusammenwirken, um im Maximum eine größere Entladestromstärke zu ermöglichen, als mit einer einzigen Verbindungsleitung oder einem einzigen Pin möglich wäre.

Ferner kann vorgesehen sein, dass die mobile Kontaktiereinheit eine Unterschiebeeinheit ist, welche zum Laden und/oder Entladen des Energiespeichers des Fahrzeugs unter das Fahrzeug schiebbar ist und/oder geschoben ist.

Günstig kann es sein, wenn eine Erstreckung der mobilen Kontaktiereinheit längs parallel zu ihrer Haupterstreckungsebene verlaufenden Richtungen um einen Faktor 5 oder mehr, insbesondere um einen Faktor 7 oder mehr, beispielsweise um einen Faktor 10 oder mehr, größer ist als eine Erstreckung der mobilen Kontaktiereinheit in einer senkrecht zu deren Haupterstreckungsebene verlaufenden Höhenrichtung der mobilen Kontaktiereinheit.

Vorzugsweise sind durch das mobile Energiesystem zwei unterschiedliche Normbetriebsspannungen und/oder Ladespannungen, insbesondere gleichzeitig, bereitstellbar, wodurch beispielsweise eine Niedrigvoltenergiespeichereinheit des Energiespeichers und eine Hochvoltenergiespeichereinheit des Energiespeichers, insbesondere gleichzeitig, ladbar und/oder entladbar sind.

Beispielsweise kann die Niedrigvoltenergiespeichereinheit geladen werden, während die Hochvoltenergiespeichereinheit entladen wird oder umgekehrt.

Alternativ können sowohl die Niedrigvoltenergiespeichereinheit als auch die Hochvoltenergiespeichereinheit gleichzeitig geladen oder entladen werden.

Alternativ kann entweder nur die Niedrigvoltenergiespeichereinheit oder nur die Hochvoltenergiespeichereinheit geladen oder entladen werden.

Bei einer alternativen Ausführungsform kann vorgesehen sein, dass das mobile Energiesystem ausschließlich zum Laden und/oder Entladen der Niedrigvoltenergiespeichereinheit dient.

Bei einer weiteren alternativen Ausführungsform kann vorgesehen sein, dass das mobile Energiesystem ausschließlich zum Laden und/oder Entladen der Hochvoltenergiespeichereinheit dient.

Beispielsweise sind die Niedrigvoltenergiespeichereinheit des Energiespeichers und die Hochvoltenergiespeichereinheit des Energiespeichers räumlich und/oder zeitlich unabhängig voneinander ladbar und/oder entladbar.

Das Laden und/oder Entladen der Niedrigvoltenergiespeichereinheit des Energiespeichers und/oder der Hochvoltenergiespeichereinheit des Energiespeichers ist insbesondere über die mobile Kontaktiereinheit durchführbar.

Vorteilhaft kann es sein, wenn die mobile Kontaktiereinheit zwei oder mehr als zwei Paare von Kontaktbereichen und/oder Kontaktelementen aufweist, welche einer Bereitstellung unterschiedlicher Ladespannungen dienen. Ergänzend oder alternativ dienen die zwei oder die mehr als zwei Paare von Kontaktbereichen und/oder Kontaktelementen einer Bereitstellung unterschiedlicher Normbetriebsspannungen.

Günstig kann es sein, wenn die mobile Kontaktiereinheit eben ist und/oder eine Unterseite zum Auflegen auf einen Boden, beispielsweise einen Hallenboden und/oder Fußboden, aufweist.

Vorzugsweise sind der eine oder die mehreren Kontaktbereiche und/oder Kontaktelemente der mobilen Kontaktiereinheit an einer der Unterseite der mobilen Kontaktiereinheit abgewandten Oberseite der mobilen Kontaktiereinheit angeordnet.

Es kann vorgesehen sein, dass das mobile Energiesystem mindestens ein Zustandsdetektierelement umfasst, mittels welchem ein entladener Zustand und/oder ein nicht ordnungsgemäßer Zustand des Energiespeichers erkennbar und/oder detektierbar sind.

Vorzugsweise sind mittels des mindestens einen Zustandsdetektierelements ein entladener Zustand und/oder ein nicht ordnungsgemäßer Zustand einer oder mehrerer Energiespeichereinheiten, beispielsweise einer Niedrigvoltenergiespeichereinheit und/oder einer Hochvoltenergiespeichereinheit, des Energiespeichers erkennbar und/oder detektierbar.

Bei einer Erkennung und/oder Detektion des entladenen Zustands und/oder eines nicht ordnungsgemäßen Zustands einer oder mehrerer Energiespeichereinheiten des Energiespeichers oder des Energiespeichers als Ganzes gibt das mindestens eine Zustandsdetektierelement vorzugsweise ein Signal, beispielsweise ein optisches Signal, aus und/oder ab.

Günstig kann es sein, wenn das mobile Energiesystem derart steuerbar ist, dass nur dann ein Ladevorgang des Energiespeichers freigeschaltet wird, wenn das mindestens eine Zustandsdetektierelement einen ordnungsgemäßen Zustand des Energiespeichers detektiert.

Bei einer Detektion eines nicht ordnungsgemäßen Zustands mittels des mindestens einen Zustandsdetektierelements ist vorzugsweise ein Entladevorgang des Energiespeichers freischaltbar.

Vorzugsweise wird bereits eine Entladung von ca. 90% oder mehr, insbesondere ca. 95% oder mehr, einer Gesamtladekapazität der entsprechenden Energiespeichereinheit oder des Energiespeichers als entladener Zustand detektiert.

Das mindestens eine Zustandsdetektierelement bildet beispielsweise einen Bestandteil einer Anzeigevorrichtung des mobilen Energiesystems.

Günstig kann es sein, wenn das mobile Energiesystem mindestens ein Entladezustandsdetektierelement umfasst, mittels welchem ein entladener Zustand der Energiespeichervorrichtung erkennbar und/oder detektierbar ist. Vorzugsweise ist das mindestens eine Entladezustandsdetektierelement ein Schaltelement, mittels welchem ein Entladevorgang der Energiespeichervorrichtung und/oder ein Ladevorgang des Energiespeichers abschaltbar ist.

Wenn das mindestens eine Entladezustandsdetektierelement von einem Nichtdetektionszustand in einen Detektionszustand gelangt, wird vorzugsweise ein Entladevorgang der Energiespeichervorrichtung und/oder ein Ladevorgang des Energiespeichers unterbrochen.

Beispielsweise kann mittels eines optischen Signals, beispielsweise mittels eines LED-Signals oder mittels eines digitalen Displays, der entladene Zustand der Energiespeichervorrichtung angezeigt werden und/oder ist anzeigbar, woraufhin ein Benutzer durch Betätigen des Schaltelements den Entladevorgang der Energiespeichervorrichtung und/oder den Ladevorgang des Energiespeichers abschalten kann.

Vorteilhaft kann es sein, wenn das mobile Energiesystem ein oder mehrere Spannungswandlerelemente zur Umwandlung einer von der Energiespeichervorrichtung abgreifbaren Austrittsspannung und/oder einer an die Energiespeichervorrichtung anlegbaren Eintrittsspannung umfasst.

Vorzugsweise sind das eine oder die mehreren Spannungswandlerelemente, insbesondere unmittelbar, in elektrischem Kontakt mit der Energiespeichervorrichtung.

Das eine oder die mehreren Spannungswandlerelemente sind vorzugsweise Gleichspannungswandler. So kann das mobile Energiesystem auch zum Laden von Kondensatoren, beispielsweise Superkondensatoren oder Ultrakondensatoren, verwendet werden.

Mittels des einen oder der mehreren Gleichspannungswandler ist vorzugsweise ein Gleichstrom bereitstellbar.

Durch die Verwendung des einen oder der mehreren Gleichspannungswandler ist insbesondere ein Ladestrom, welcher zwischen der Energiespeichervorrichtung und dem Energiespeicher des Fahrzeugs fließt, begrenzbar oder begrenzt.

Ferner kann durch die Verwendung des einen oder der mehreren Gleichspannungswandler vorzugsweise eine Ladeschlussspannung, bei welcher ein Ladevorgang des Energiespeichers beendet wird, begrenzt werden.

Durch die Verwendung des einen oder der mehreren Gleichspannungswandler ist insbesondere ein kontrollierter Ladevorgang des Energiespeichers ausgebildet. Ein unkontrolliertes Umladen von der Energiespeichervorrichtung in den Energiespeicher des Fahrzeugs kann vermieden werden. So können hohe Ströme vermieden werden.

Gemäß einer bevorzugten Ausführungsform kann vorgesehen sein, dass einer oder mehrere der Gleichspannungswandler Spannungsvervielfacher sind, welche so ausgebildet und/oder eingerichtet sind, dass eine Austrittsspannung, welche von der Energiespeichervorrichtung abgreifbar ist, vervielfacht wird. So kann beispielsweise die Energiespeichervorrichtung bei einer niedrigeren Spannung betrieben werden als der Energiespeicher.

Günstig kann es sein, wenn das mobile Energiesystem eine Anzeigevorrichtung umfasst, welche beispielsweise an einer parallel zu der Schwerkraftrichtung angeordneten Bedienseite eines Gehäuses des mobilen Energiesystems angeordnet ist.

Es wird vorzugsweise auf eine Anordnung des mobilen Energiesystems in bestimmungsgemäßem Gebrauch Bezug genommen.

Die Anzeigevorrichtung umfasst beispielsweise eines oder mehrere der folgenden Elemente:
- ein erstes Spannungsanzeigeelement zur Anzeige einer Spannung bei einem Ladevorgang der Energiespeichervorrichtung;
- ein erstes Stromanzeigeelement zur Anzeige eines Stroms bei einem Ladevorgang der Energiespeichervorrichtung;
- ein zweites Spannungsanzeigeelement zur Anzeige einer Spannung bei einem Ladevorgang des Energiespeichers durch die Energiespeichervorrichtung;
- ein zweites Stromanzeigeelement zur Anzeige eines Stroms bei einem Ladevorgang des Energiespeichers durch die Energiespeichervorrichtung;
- ein drittes Spannungsanzeigeelement zur Anzeige einer Spannung bei einem Entladevorgang des Energiespeichers durch die Entladevorrichtung; und
- ein drittes Stromanzeigeelement zur Anzeige eines Stroms bei einem Entladevorgang des Energiespeichers durch die Entladevorrichtung.

Die genannten Anzeigeelemente können voneinander separate Anzeigeelemente sein. Alternativ hierzu kann vorgesehen sein, dass mehrere, insbesondere sämtliche, Anzeigeelemente in einem einzigen Display realisiert sind, wobei die Anzeigeelemente gleichzeitig auf unterschiedlichen Bereichen des Displays und/oder nacheinander durch Umschalten des Displays auf dem Display darstellbar sind.

Durch das erste Spannungsanzeigeelement und/oder das erste Stromanzeigeelement lässt sich insbesondere ein Fortschritt bei dem Ladevorgang der Energiespeichervorrichtung verfolgen und/oder überwachen, wobei eine Anzeige in Prozent oder in Absolutwerten vorgesehen sein kann.

Durch das zweite Spannungsanzeigeelement und/oder das zweite Stromanzeigeelement lässt sich insbesondere ein Fortschritt bei dem Ladevorgang des Energiespeichers verfolgen und/oder überwachen, wobei eine Anzeige in Prozent oder in Absolutwerten vorgesehen sein kann.

Durch das dritte Spannungsanzeigeelement und/oder das dritte Stromanzeigeelement lässt sich insbesondere ein Fortschritt bei dem Entladevorgang des Energiespeichers verfolgen und/oder überwachen, wobei eine Anzeige in Prozent oder in Absolutwerten vorgesehen sein kann.

Vorzugsweise umfasst das mobile Energiesystem eine erste Spannungsmessvorrichtung zur Messung einer Spannung bei einem Ladevorgang der Energiespeichervorrichtung, welche mit dem ersten Spannungsanzeigeelement verbunden ist. Es kann vorgesehen sein, dass das erste Spannungsanzeigeelement einen Bestandteil der ersten Spannungsmessvorrichtung bildet.

Insbesondere umfasst das mobile Energiesystem eine erste Strommessvorrichtung zur Messung eines Stroms bei einem Ladevorgang der Energiespeichervorrichtung, welche mit dem ersten Stromanzeigeelement verbunden ist. Es kann vorgesehen sein, dass das erste Stromanzeigeelement einen Bestandteil der ersten Strommessvorrichtung bildet.

Günstig kann es sein, wenn das mobile Energiesystem eine zweite Spannungsmessvorrichtung zur Messung einer Spannung bei einem Ladevorgang des Energiespeichers durch die Energiespeichervorrichtung umfasst, welche mit dem zweiten Spannungsanzeigeelement verbunden ist. Es kann vorgesehen sein, dass das zweite Spannungsanzeigeelement einen Bestandteil der zweiten Spannungsmessvorrichtung bildet.

Günstig kann es sein, wenn das mobile Energiesystem eine zweite Strommessvorrichtung zur Messung eines Stroms bei einem Ladevorgang des Energiespeichers durch die Energiespeichervorrichtung umfasst, welche mit dem zweiten Stromanzeigeelement verbunden ist. Es kann vorgesehen sein, dass das zweite Stromanzeigeelement einen Bestandteil der zweiten Strommessvorrichtung bildet.

Vorzugsweise umfasst das mobile Energiesystem eine dritte Spannungsmessvorrichtung zur Messung einer Spannung bei einem Entladevorgang des Energiespeichers durch die Entladevorrichtung, welche mit dem dritten Spannungsanzeigeelement verbunden ist. Es kann vorgesehen sein, dass das dritte Spannungsanzeigeelement einen Bestandteil der dritten Spannungsmessvorrichtung bildet.

Vorzugsweise umfasst das mobile Energiesystem eine dritte Strommessvorrichtung zur Messung eines Stroms bei einem Entladevorgang des Energiespeichers durch die Entladevorrichtung, welche mit dem dritten Stromanzeigeelement verbunden ist. Es kann vorgesehen sein, dass das dritte Stromanzeigeelement einen Bestandteil der dritten Strommessvorrichtung bildet.

Vorteilhaft kann es sein, wenn das mobile Energiesystem mindestens ein Positionierhilfeelement umfasst, welches beispielsweise ein Signal ausgibt und/oder abgibt, wenn sich das Fahrzeug relativ zu dem mobilen Energiesystem in einer Ladeposition befindet.

Ergänzend oder alternativ kann vorgesehen sein, dass das mindestens eine Positionierhilfeelement ein Signal ausgibt und/oder abgibt, wenn sich das Fahrzeug relativ zu dem mobilen Energiesystem in einer Entladeposition befindet.

Das Signal kann beispielsweise ein optisches Signal sein.

Vorzugsweise wird von dem mindestens einen Positionierhilfeelement ein Signal ausgegeben und/oder abgegeben, wenn ein oder mehrere Kontaktbereiche und/oder Kontaktelemente der mobilen Kontaktiereinheit teilweise oder vollständig an Kontaktbereichen und/oder Kontaktelementen des Fahrzeugs anliegen.

Vorteilhaft kann es sein, wenn die mobile Kontaktiereinheit derart steuerbar und/oder ansteuerbar ist, dass nur bei einem mittels einer oder mehrerer Sensorvorrichtungen erkannten Fahrzeugs ein Strom und/oder eine Spannung zum Laden des Energiespeichers des Fahrzeugs und/oder zum Entladen des Energiespeichers des Fahrzeugs an einem oder mehreren Kontaktbereichen und/oder Kontaktelementen angelegt wird, insbesondere freigeschaltet wird.

Die einen oder die mehreren Sensorvorrichtungen bilden vorzugsweise einen Bestandteil des mindestens einen Positionierhilfeelements.

Das mindestens eine Positionierhilfeelement bildet beispielsweise einen Bestandteil der Anzeigevorrichtung des mobilen Energiesystems.

Vorzugsweise ist das mindestens eine Positionierhilfeelement ein Schaltelement, mittels welchem ein Ladevorgang und/oder Entladevorgang des Energiespeichers anschaltbar ist. Beispielsweise kann ein Benutzer, sobald das mindestens eine Positionierhilfeelement ein Signal ausgibt und/oder abgibt das mindestens eine Positionierhilfeelement von einer Nichtbetriebsstellung in eine Betriebsstellung bringen, wodurch ein Ladevorgang und/oder Entladevorgang des Energiespeichers freigeschaltet wird.

Vorteilhaft kann es sein, wenn das mobile Energiesystem eine Basiseinheit aufweist, welche, beispielsweise mittels mehrerer Rollen, verfahrbar ist. Beispielsweise sind eine oder mehrere der Rollen so ausgebildet und/oder angeordnet, dass sie frei drehbar sind. Ergänzend oder alternativ sind beispielsweise eine oder mehrere der Rollen so ausgebildet und/oder angeordnet, dass sie einzeln blockierbar sind.

Aufgrund dessen, dass die eine oder die mehreren Rollen einzeln blockierbar sind, kann eine Position der Basiseinheit des mobilen Energiesystems, insbesondere jederzeit, fixiert werden.

Vorzugsweise umfasst das mobile Energiesystem vier Rollen, mittels welchen die Basiseinheit verfahrbar ist.

Vorzugsweise umfasst das mobile Energiesystem ein, beispielsweise zumindest näherungsweise quaderförmiges, Gehäuse, welches einen Innenraum umgibt und/oder einen Bestandteil der Basiseinheit des mobilen Energiesystems bildet. Vorzugsweise ist die Energiespeichervorrichtung in dem Innenraum des Gehäuses angeordnet. So ist das mobile Energiesystem insbesondere kompakt ausgebildet.

Die Entladevorrichtung ist vorzugsweise an dem Gehäuse des mobilen Energiesystems festgelegt, insbesondere von außen oder an einer Außenseite.

Alternativ zu einer Festlegung der Entladevorrichtung von außen oder an einer Außenseite an dem Gehäuse kann vorgesehen sein, dass die Entladevorrichtung in dem Innenraum des Gehäuses angeordnet ist.

Vorteilhaft kann es sein, wenn das eine oder die mehreren Spannungswandlerelemente des mobilen Energiesystems in dem Innenraum des Gehäuses angeordnet sind.

Das Gehäuse des mobilen Energiesystems ist vorzugsweise auf Rollen verfahrbar.

Günstig kann es sein, wenn das mobile Energiesystem eine Gestellvorrichtung umfasst, welche beispielsweise das Gehäuse des mobilen Energiesystems in Schwerkraftrichtung gesehen von unten aufnimmt.

Ergänzend oder alternativ zu der Aufnahme des Gehäuses durch die Gestellvorrichtung kann vorgesehen sein, dass an der Gestellvorrichtung mehrere Führungsvorrichtungen zur Aufnahme und/oder Führung jeweils einer Rolle des mobilen Energiesystems festgelegt sind.

Günstig kann es sein, wenn die Gestellvorrichtung ein Griffelement aufweist, welches insbesondere um zwei oder mehrere Nebenseiten des Gehäuses des mobilen Energiesystems umlaufend ausgebildet ist.

Beispielsweise ist das Griffelement um drei Seiten des Gehäuses umlaufend ausgebildet und/oder umgibt das Griffelement des Gehäuses des mobilen Energiesystems dreiseitig. So lässt sich die Basiseinheit insbesondere auf ergonomisch günstige Weise bewegen, beispielsweise schieben oder ziehen.

Vorzugsweise ist das Griffelement von Außenseiten des Gehäuses des mobilen Energiesystems beabstandet, so dass ein Benutzer zwischen dem Griffelement und dem Gehäuse des mobilen Energiesystems hindurchgreifen und/oder das Griffelement umgreifen kann. Mittels des Griffelements ist die Basiseinheit des mobilen Energiesystems beispielsweise verfahrbar.

Die Nebenseiten des Gehäuses sind vorzugsweise zumindest näherungsweise parallel zu der Schwerkraftrichtung und/oder zumindest näherungsweise senkrecht zu Bewegungsrichtungen des mobilen Energiesystems angeordnet.

Vorzugsweise ist die Basiseinheit entlang Bewegungsrichtungen bewegbar, welche senkrecht zur Schwerkraftrichtung verlaufen.

Es kann vorgesehen sein, dass das mobile Energiesystem einen oder mehrere Kabelhalter umfasst, welche insbesondere seitlich an dem Gehäuse angeordnet sind und/oder einen Bestandteil der Gestellvorrichtung bilden. Vorzugsweise weisen der eine oder die mehreren Kabelhalter einen zumindest näherungsweise U-förmigen Querschnitt auf und/oder weisen, insbesondere zumindest näherungsweise U-förmige, Vertiefungen auf, in welchen Kabel aufnehmbar und/oder aufgenommen sind. Beispielsweise sind in einem Benutzungszustand des mobilen Energiesystems ein oder mehrere, insbesondere aufgewickelte, Kabel in den einen oder die mehreren Kabelhalter eingehängt.

Das/Die Kabel sind beispielsweise das Verbindungskabel, mittels welchem die mobile Kontaktiereinheit an die Basiseinheit anbindbar ist, beispielsweise in Form eines Netzwerkanschlusskabels, und/oder das Ladekabel zum Laden der Energiespeichervorrichtung.

Beispielsweise umfasst das mobile Energiesystem zwei Kabelhalter, welche, insbesondere an einander gegenüberliegenden Seiten, seitlich an dem Gehäuse des mobilen Energiesystems angeordnet sind.

Weitere bevorzugte Merkmale und/oder Vorteile der Erfindung sind Gegenstand der nachfolgenden Beschreibung und der zeichnerischen Darstellung eines Ausführungsbeispiels.

Es zeigen:
- Fig. 1: eine schematische Darstellung einer Ausführungsform eines mobilen Energiesystems zum Laden und/oder Entladen eines Energiespeichers eines Fahrzeugs;
- Fig. 2: eine schematische perspektivische Darstellung des mobilen Energiesystems, wobei das mobile Energiesystem eine verfahrbare Basiseinheit und eine mittels eines Verbindungskabels daran angebundene mobile Kontaktiereinheit aufweist, wobei die mobile Kontaktiereinheit plattenförmig ausgebildet ist;
- Fig. 3: eine schematische Vorderansicht des mobilen Energiesystems aus den Fig. 1 und 2, wobei eine Anzeigevorrichtung, welche an einer Bedienseite eines Gehäuses des mobilen Energiesystems angeordnet ist, zu sehen ist; und
- Fig. 4: eine schematische vergrößerte Darstellung der Anzeigevorrichtung des mobilen Energiesystems.

Gleiche oder funktional äquivalente Elemente sind in sämtlichen Figuren mit denselben Bezugszeichen bezeichnet.

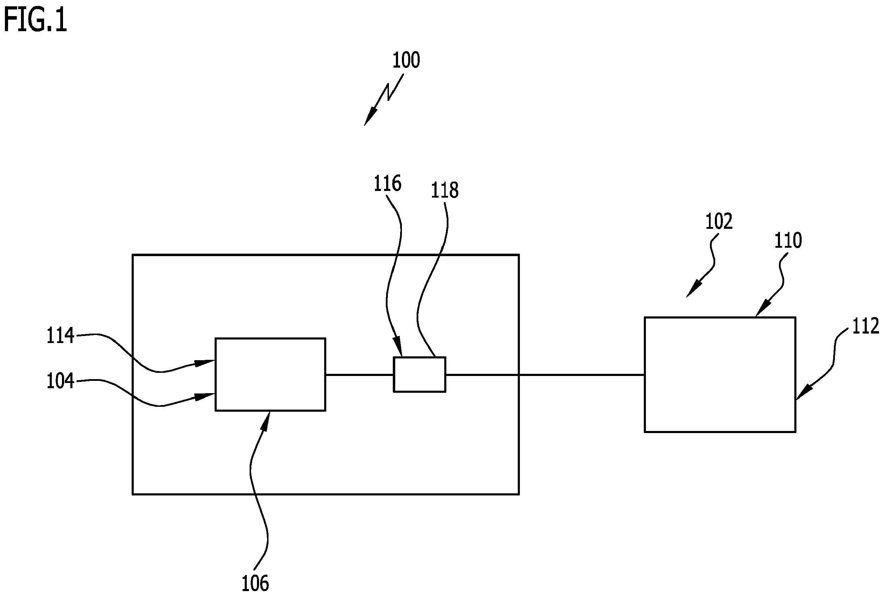

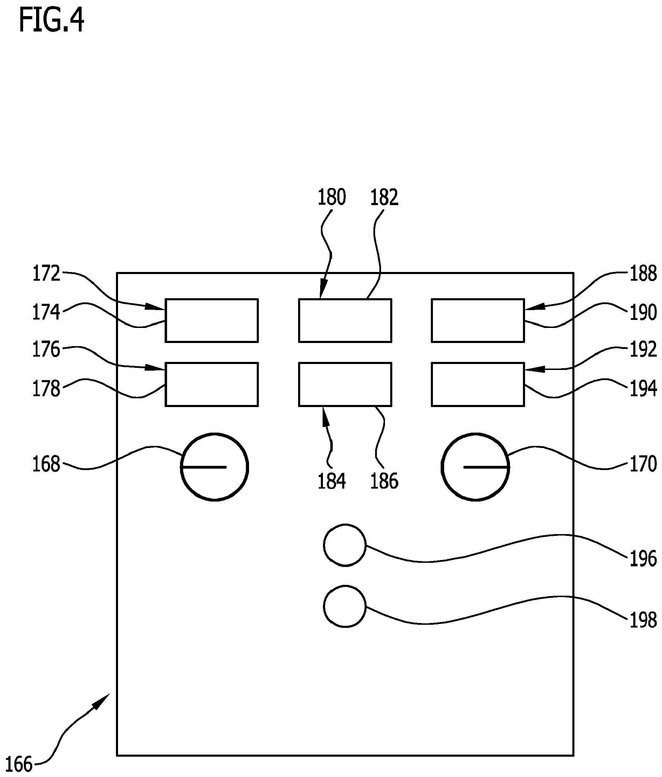

Ein in den Fig. 1 bis 4 dargestelltes als Ganzes mit 100 bezeichnetes mobiles Energiesystem dient insbesondere einem Laden und/oder Entladen eines Energiespeichers 102 eines Fahrzeugs. Das Fahrzeug kann beispielsweise ein Transportfahrzeug zum Transportieren von Gegenständen sein. Vorzugsweise ist das Fahrzeug ein fahrerloses Fahrzeug, beispielsweise ein fahrerloses Transportfahrzeug.

Das mobile Energiesystem 100 umfasst vorzugsweise eine Energiespeichervorrichtung 104. Ergänzend oder alternativ umfasst das mobile Energiesystem 100 eine Entladevorrichtung 106.

Die Energiespeichervorrichtung 104 dient vorzugsweise einem Speichern von elektrischer Energie und/oder einem Bereitstellen von elektrischer Energie für einen Ladevorgang des Energiespeichers 102 des Fahrzeugs.

Die Entladevorrichtung 106 dient vorzugsweise einem Entladen des Energiespeichers 102 des Fahrzeugs.

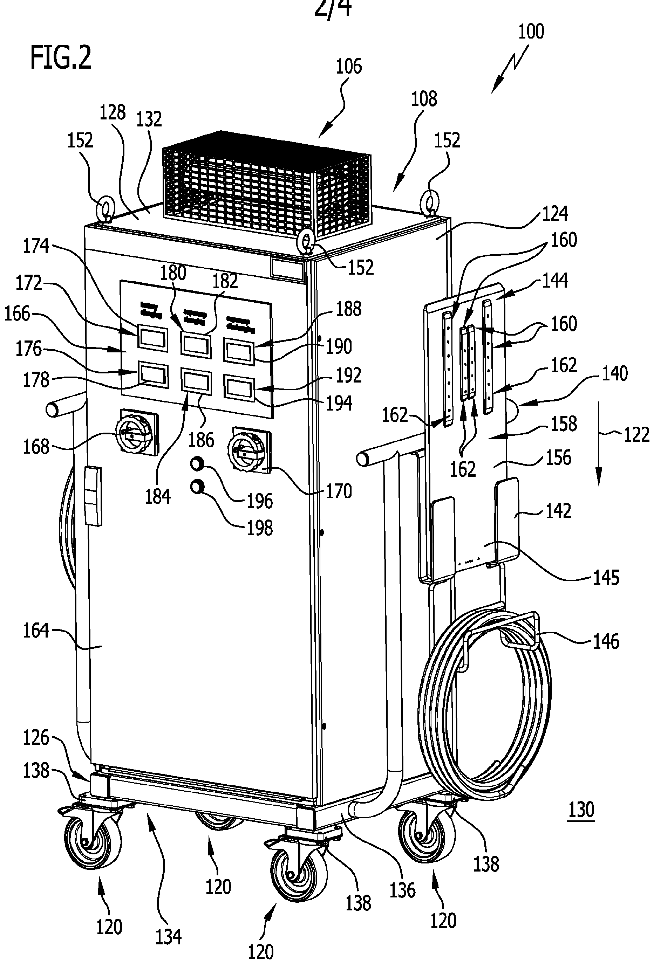

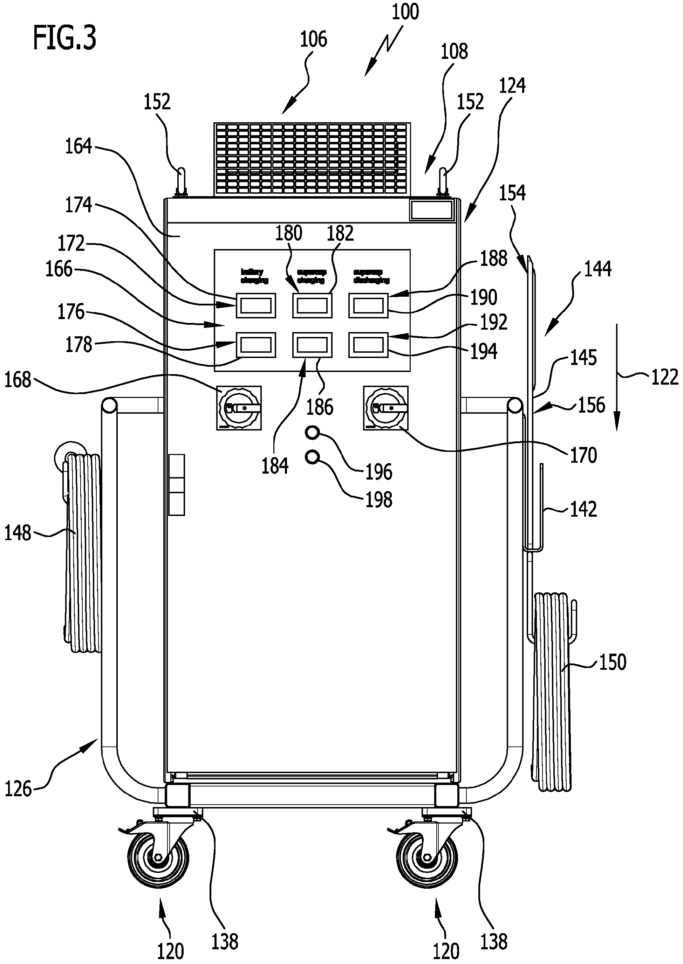

Wie insbesondere in den Fig. 2 und 3 zu sehen ist, ist die Entladevorrichtung 106 vorliegend als von der Energiespeichervorrichtung 104 getrenntes Element ausgebildet.

Ergänzend (im Falle einer zweiteiligen Entladevorrichtung 106) oder alternativ zu einer separaten Ausbildung der Entladevorrichtung 106 kann vorgesehen sein, dass die Entladevorrichtung 106 vollständig oder teilweise von der Energiespeichervorrichtung 104 gebildet ist.

Vorliegend umfasst die Entladevorrichtung 106 eine Käfigstruktur und/oder Gitterstruktur, welche die übrigen Bestandteile der Entladevorrichtung 106 umgibt.

Beispielsweise ist die Entladevorrichtung 106 ein Ableitwiderstand und/oder ein Bleeder Resistor und/oder ein Bremswiderstand. Mittels der Entladevorrichtung 106 kann der Energiespeicher 102 des Fahrzeugs bei Bedarf entladen werden. Nach einer Entladung des Energiespeichers 102 des Fahrzeugs können Wartungsarbeiten und/oder Reparaturarbeiten gefahrlos durchgeführt werden. Ergänzend oder alternativ können einzelne Elemente des Energiespeichers 102 ausgebaut und/oder ausgetauscht werden. Durch die Integration der Entladevorrichtung 106 in das mobile Energiesystem 100 kann diese zusammen mit einer Basiseinheit 108 verfahren werden. Eine separate Lagerung und/oder ein separater Transport der Entladevorrichtung 106 sind somit vorzugsweise entbehrlich.

Beispielsweise umfasst der Energiespeicher 102 mehrere Energiespeichereinheiten 110, beispielsweise mehrere Superkondensatoren 112.

Vorzugsweise umfasst die Energiespeichervorrichtung 104 einen oder mehrere Akkumulatoren 114 oder ist daraus gebildet.

Insbesondere für eine energieeffiziente Ladung der Superkondensatoren 112 umfasst das mobile Energiesystem 100 vorzugsweise ein oder mehrere Spannungswandlerelemente 116, beispielsweise einen oder mehrere Gleichspannungswandler 118.

Der eine oder die mehreren Gleichspannungswandler 118 dienen vorzugsweise einer Begrenzung eines Ladestroms und/oder einer Ladeschlussspannung bei einem Ladevorgang des Energiespeichers 102.

Vorzugsweise verhindern der eine oder die mehreren Gleichspannungswandler 118 ein unkontrolliertes Umladen der Energiespeichervorrichtung 104 in den Energiespeicher 102 des Fahrzeugs. So können hohe Ströme und ein Durchbrennen von Verbindungsleitungen verhindert werden.

Es kann vorgesehen sein, dass der eine oder die mehreren Gleichspannungswandler 118 Spannungsvervielfacher sind, welche so ausgebildet und/oder eingerichtet sind, dass eine Austrittsspannung, welche von der Energiespeichervorrichtung 104 abgreifbar ist, vervielfacht wird. So ist die Energiespeichervorrichtung 104 insbesondere mit einer Spannung betreibbar, welche niedriger ist als eine Spannung, mit welcher der Energiespeicher 102 betreibbar ist und/oder betrieben wird.

Es kann vorgesehen sein, dass der Energiespeicher 102 eine oder mehrere Energiespeichereinheiten 100 umfasst, welche beispielsweise unterschiedliche Normbetriebsspannungen und/oder Ladespannungen aufweisen.

Vorzugsweise umfasst der Energiespeicher 102 eine oder mehrere Niedrigvoltenergiespeichereinheiten und eine oder mehrere Hochvoltenergiespeichereinheiten.

Beispielsweise kann vorgesehen sein, dass die eine oder die mehreren Niedrigvoltenergiespeichereinheiten des Energiespeichers 102 mit einer Spannung, insbesondere einer Gleichspannung, von zumindest näherungsweise 24 Volt betreibbar ist.

Ferner kann vorgesehen sein, dass die eine oder die mehreren Hochvoltenergiespeichereinheiten mit einer Spannung, insbesondere einer Gleichspannung, von zumindest näherungsweise 48 Volt betreibbar sind.

Wie insbesondere in den Fig. 2 und 3 zu sehen ist, umfasst das mobile Energiesystem 100, wie bereits erwähnt, eine Basiseinheit 108, welche insbesondere mittels Rollen 120 entlang Bewegungsrichtungen, welche senkrecht zu der Schwerkraftrichtung 122 angeordnet sind, verfahrbar und/oder bewegbar ist.

Die Basiseinheit 108 umfasst vorliegend ein Gehäuse 124 und eine Gestellvorrichtung 126. Das Gehäuse 124 ist vorliegend zumindest näherungsweise quaderförmig ausgebildet und umfasst vier zumindest näherungsweise parallel zu der Schwerkraftrichtung 122 angeordnete Nebenseiten, welche durch zwei senkrecht dazu angeordnete Hauptseiten miteinander verbunden sind.

Beispielsweise ist die Entladevorrichtung 106 an einer Außenseite 128 einer von einem Boden 130, beispielsweise einem Fußboden und/oder einem Hallenboden, abgewandten Oberseite 132 des Gehäuses 124 festgelegt.

An einer der Oberseite 132 gegenüberliegenden Bodenseite 134 des Gehäuses 124 ist das Gehäuse 124 vorliegend von der Gestellvorrichtung 126, beispielsweise ein Bodenelement 136 der Gestellvorrichtung 126, aufgenommen und/oder daran festgelegt.

An einer dem Gehäuse 124 abgewandten Seite des Bodenelements 136 sind vorliegend Führungsvorrichtungen 138 an dem Bodenelement 136 der Gestellvorrichtung 126 festgelegt, welche vorzugsweise einer Führung der Rollen 120, vorliegend vier Rollen 120, dienen. Beispielsweise sind die Rollen 120 frei drehbar und/oder einzeln blockierbar.

Die Gestellvorrichtung 126 umfasst vorliegend ferner ein Griffelement 140, welches beispielsweise um drei Nebenseiten des Gehäuses 124 umlaufend ausgebildet ist. Das Griffelement 140 bildet beispielsweise einen Haltegriff für einen Benutzer des mobilen Energiesystems 100.

Beispielsweise ist das Griffelement 140 mittels Verbindungsstreben, welche sich von dem Bodenelement 136 entgegen der Schwerkraftrichtung 122 nach oben wegerstrecken, von dem Gehäuse 124 beabstandet festgelegt.

Insbesondere durch das Griffelement 140 ist die Basiseinheit 108 des mobilen Energiesystems 100 von einem Benutzer über den Boden 130 schiebbar und/oder ziehbar.

Es kann vorgesehen sein, dass die Gestellvorrichtung 126 eine Kontaktierelementaufnahme 142 umfasst, welche einer Aufnahme einer mobilen Kontaktiereinheit 144 des mobilen Energiesystems 100 dient.

Vorzugsweise ist die mobile Kontaktiereinheit 144 in einem Zustand, in dem sie nicht zur elektrischen Kontaktierung verwendet wird, in der Kontaktierelementaufnahme 142 aufgenommen (vgl. Fig. 2 und 3).

Die Kontaktierelementaufnahme 142 ist vorzugsweise an dem Griffelement 140 festgelegt und ist insbesondere in einem senkrecht zu der Oberseite 132 des Gehäuses 124 genommenen Querschnitt zumindest näherungsweise U-förmig ausgebildet. Die mobile Kontaktiereinheit 144 ist vorliegend zwischen Schenkeln der U-Form aufnehmbar und/oder aufgenommen.

Vorzugsweise umfasst die Gestellvorrichtung 126 ferner ein oder mehrere, vorliegend zwei, Kabelhalter 146, welche insbesondere einer Aufnahme von Kabeln dienen.

Die Kabelhalter 146 sind vorzugsweise an einander gegenüberliegenden Nebenseiten des Gehäuses 124 angeordnet und/oder weisen in einem Querschnitt zumindest näherungsweise eine U-Form auf. Der Querschnitt ist vorzugsweise senkrecht zu der Oberseite 132 des Gehäuses 124 genommen. Zwischen Schenkeln der U-Formen sind vorzugsweise ein oder mehrere Kabel, beispielsweise in aufgewickeltem Zustand, aufnehmbar und/oder aufgenommen.

Beispielsweise dient ein erster Kabelhalter 146 einer Aufnahme eines Ladekabels 148, mittels welchem die Energiespeichervorrichtung 104 mit einer Stromquelle und/oder Spannungsquelle verbindbar ist und so geladen werden kann. Der erste Kabelhalter 146 ist vorzugsweise an einer der Kontaktierelementaufnahme 142 abgewandten Seite des Gehäuses 124 angeordnet.

Ein zweiter Kabelhalter 146 dient beispielsweise einer Aufnahme eines Verbindungskabels 150, mittels welchem die mobile Kontaktiereinheit 144 an die Basiseinheit 108, insbesondere die Energiespeichervorrichtung 104, anbindbar und/oder angebunden ist. Der zweite Kabelhalter 146 ist vorzugsweise benachbart zu der Kontaktierelementaufnahme 142 angeordnet.

Es kann vorgesehen sein, dass die Basiseinheit 108 ein oder mehrere Anbindungselemente 152 aufweist, welche beispielsweise an der Oberseite 132 des Gehäuses 124 festgelegt sind und/oder in welchen Verbindungselemente aufnehmbar, beispielsweise einhakbar, sind, wodurch das mobile Energiesystem 100 als Ganzes angehoben werden kann.

Vorzugsweise ist die mobile Kontaktiereinheit 144 unabhängig von der Basiseinheit 108 bewegbar. Die mobile Kontaktiereinheit 144 dient insbesondere einer elektrischen Verbindung der Energiespeichervorrichtung 104 und des Energiespeichers 102 und/oder der Entladevorrichtung 106 und des Energiespeichers 102.

Wie insbesondere in den Fig. 2 und 3 zu sehen ist, ist die mobile Kontaktiereinheit 144 vorliegend plattenförmig ausgebildet und weist insbesondere eine in einem Benutzungszustand auf dem Boden 130 platzierte Unterseite 154 und eine der Unterseite 154 gegenüberliegende Oberseite 156 auf.

Alternativ oder ergänzend kann vorgesehen sein, dass die mobile Kontaktiereinheit 144 ein Steckerelement umfasst oder daraus gebildet ist (nicht zeichnerisch dargestellt).

Vorzugsweise ist die mobile Kontaktiereinheit 144 zumindest näherungsweise eben und/oder planar ausgebildet.

Insbesondere ist eine Erstreckung der mobilen Kontaktiereinheit 144 längs parallel zu ihrer Haupterstreckungsebene verlaufenden Richtungen um einen Faktor 5 oder mehr, insbesondere um einen Faktor 7 oder mehr, beispielsweise um einen Faktor 10 oder mehr, größer als eine Erstreckung der mobilen Kontaktiereinheit 144 in einer senkrecht zu ihrer Haupterstreckungsebene verlaufenden Höhenrichtung der mobilen Kontaktiereinheit 144.

Beispielsweise ist die mobile Kontaktiereinheit 144 von einer Bodenplatte 145 gebildet oder umfasst eine solche. Während eines (nicht dargestellten) Ladevorgangs und/oder Entladevorgangs des Energiespeichers 102 liegt die Bodenplatte 145 vorzugsweise auf dem Boden 130 auf, insbesondere mit ihrer Unterseite 154.

Vorteilhaft kann es sein, wenn die mobile Kontaktiereinheit 144 eine Unterschiebeeinheit 158 bildet, welche zum Laden und/oder Entladen des Energiespeichers 102 des Fahrzeugs unter das Fahrzeug schiebbar und/oder geschoben ist.

Insbesondere an der Oberseite 156 weist die mobile Kontaktiereinheit 144 vorliegend mehrere Kontaktbereiche 160 und/oder Kontaktelemente 162 auf.

Die Kontaktbereiche 160 und/oder Kontaktelemente 162 dienen vorzugsweise einer elektrischen Kontaktierung der Energiespeichervorrichtung 104 und des Energiespeichers 102 und/oder der Entladevorrichtung 106 und des Energiespeichers 102. Insbesondere ist über die Kontaktbereiche 160 und/oder Kontaktelemente 162 eine Spannung und/oder ein Strom von der Energiespeichervorrichtung 104 auf den Energiespeicher 102 übertragbar oder umgekehrt.

Es kann vorgesehen sein, dass die mobile Kontaktiereinheit 144 mehrere Paare von Kontaktbereichen 160 und/oder Kontaktelementen 162 aufweist, welche beispielsweise einem Anlegen und/oder Abgreifen unterschiedlicher Normbetriebsspannungen und/oder Ladespannungen dienen.

Die Kontaktbereiche 160 und/oder Kontaktelemente 162 sind insbesondere derart ausgebildet und/oder angeordnet, dass eine Querkontaktierung zwischen Kontaktbereichen 160 und/oder Kontaktelementen 162 von nicht zueinander gehörenden Paaren von Kontaktbereichen 160 bzw. Kontaktelementen 162 ausgeschlossen ist.

Beispielsweise sind die Kontaktbereiche 160 und/oder Kontaktelemente 162 bandförmig ausgebildet und/oder derart angeordnet, dass ihre Haupterstreckungsrichtungen zumindest näherungsweise parallel zueinander angeordnet sind.

Vorzugsweise sind die Energiespeichervorrichtung 104 und/oder der eine oder die mehreren Gleichspannungswandler 118 in einem Innenraum des Gehäuses 124 angeordnet und/oder aufgenommen.

Alternativ zu der vorliegend dargestellten Ausführungsform kann vorgesehen sein, dass die Entladevorrichtung 106 in dem Innenraum des Gehäuses 124 angeordnet und/oder aufgenommen ist.

Das Gehäuse 124 ist vorliegend schrankförmig ausgebildet.

Beispielsweise weist das Gehäuse 124 eine Bedienseite 164 auf, welche vorliegend eine aufschwenkbare und/oder zuschwenkbare Tür des schrankförmigen Gehäuses 124 bildet.

Es kann vorgesehen sein, dass das mobile Energiesystem 100 eine Anzeigevorrichtung 166 aufweist, welche insbesondere einer Überwachung eines oder mehrerer von dem mobilen Energiesystem 100 durchgeführten Vorgänge dient.

Die Anzeigevorrichtung 166 ist vorliegend an der Bedienseite 164 des Gehäuses 124 angeordnet.

Vorteilhaft kann es sein, wenn das mobile Energiesystem 100 ein Anschaltelement 168, mittels welchem das mobile Energiesystem 100 als Ganzes anschaltbar ist, und ein Abschaltelement 170, mittels welchem das mobile Energiesystem 100 als Ganzes abschaltbar ist, aufweist. Das Anschaltelement 168 und/oder das Abschaltelement 170 sind beispielsweise Drehschalter.

Insbesondere bilden das Anschaltelement 168 und/oder das Abschaltelement 170 Hauptschalter, welche beispielsweise räumlich voneinander getrennt ausgebildet sind.

Günstig kann es sein, wenn das mobile Energiesystem 100 eine erste Spannungsmessvorrichtung 172 aufweist, welche einer Messung einer Spannung bei einem Ladevorgang der Energiespeichervorrichtung 104 dient.

Die Spannungsmessvorrichtung 172 umfasst vorzugsweise ein erstes Spannungsanzeigeelement 174, mittels welchem eine Spannung bei einem Ladevorgang der Energiespeichervorrichtung 104 anzeigbar und/oder überwachbar ist. Beispielsweise ist das erste Spannungsanzeigeelement 174 eine digitale Spannungsanzeige, welche einen Spannungswert anzeigt.

Ergänzend oder alternativ umfasst das mobile Energiesystem 100 vorzugsweise eine erste Strommessvorrichtung 176, welche einer Messung eines Stroms bei einem Ladevorgang der Energiespeichervorrichtung 104 dient.

Die erste Strommessvorrichtung 176 umfasst vorzugsweise ein erstes Stromanzeigeelement 178, mittels welchem ein Strom bei einem Ladevorgang der Energiespeichervorrichtung 104 anzeigbar und/oder überwachbar ist. Beispielsweise ist das erste Stromanzeigeelement 178 eine digitale Stromanzeige, welche einen Stromwert anzeigt.

Ferner umfasst das mobile Energiesystem 100 vorliegend eine zweite Spannungsmessvorrichtung 180, welche einer Messung einer Spannung bei einem Ladevorgang des Energiespeichers 102 des Fahrzeugs dient.

Die zweite Spannungsmessvorrichtung 180 umfasst vorliegend ein zweites Spannungsanzeigeelement 182, mittels welchem eine Spannung bei einem Ladevorgang des Energiespeichers 102 des Fahrzeugs anzeigbar und/oder überwachbar ist. Beispielsweise ist das zweite Spannungsanzeigeelement 182 eine digitale Spannungsanzeige, welche einen Spannungswert anzeigt.

Das mobile Energiesystem 100 umfasst vorliegend ergänzend oder alternativ eine zweite Strommessvorrichtung 184, welche einer Messung eines Stroms bei einem Ladevorgang des Energiespeichers 102 des Fahrzeugs dient.

Die zweite Strommessvorrichtung 184 umfasst vorliegend ein zweites Stromanzeigeelement 186, mittels welchem ein Strom bei einem Ladevorgang des Energiespeichers 102 des Fahrzeugs anzeigbar und/oder überwachbar ist. Beispielsweise ist das zweite Stromanzeigeelement 186 eine digitale Stromanzeige, welche einen Stromwert anzeigt.

Vorliegend umfasst das mobile Energiesystem 100 eine dritte Spannungsmessvorrichtung 188, welche einer Messung einer Spannung bei einem Entladevorgang des Energiespeichers 102 des Fahrzeugs, insbesondere durch die Entladevorrichtung 106, dient.

Die dritte Spannungsmessvorrichtung 188 umfasst vorliegend ein drittes Spannungsanzeigeelement 190, mittels welchem eine Spannung bei einem Entladevorgang des Energiespeichers 102 des Fahrzeugs, insbesondere durch die Entladevorrichtung 106, anzeigbar und/oder überwachbar ist. Beispielsweise ist das dritte Spannungsanzeigeelement 190 eine digitale Spannungsanzeige, welche einen Spannungswert anzeigt.

Vorliegend umfasst das mobile Energiesystem 100 eine dritte Strommessvorrichtung 192, welche einer Messung eines Stroms bei einem Entladevorgang des Energiespeichers 102 des Fahrzeugs, insbesondere durch die Entladevorrichtung 106, dient.

Die dritte Strommessvorrichtung 192 umfasst vorliegend ein drittes Stromanzeigeelement 194, mittels welchem ein Strom bei einem Entladevorgang des Energiespeichers 102 des Fahrzeugs, insbesondere durch die Entladevorrichtung 106, anzeigbar und/oder überwachbar ist. Beispielsweise ist das dritte Stromanzeigeelement 192 eine digitale Stromanzeige, welche einen Stromwert anzeigt.

Es kann vorgesehen sein, dass eines oder mehrere der folgenden Elemente einen Bestandteil der Anzeigevorrichtung 166 bilden:
- das erste Spannungsanzeigeelement 174; und/oder
- das erste Stromanzeigeelement 178; und/oder
- das zweite Spannungsanzeigeelement 182; und/oder
- das zweite Stromanzeigeelement 186; und/oder
- das dritte Spannungsanzeigeelement 190; und/oder
- das dritte Stromanzeigeelement 194.

Beispielsweise umfasst das mobile Energiesystem 100 ferner mindestens ein Positionierhilfeelement 196, welches einem Erkennen und/oder Detektieren einer Relativposition der mobilen Kontaktiereinheit 144 und des Fahrzeugs, in welchem der Energiespeicher 102 ladebereit und/oder entladebereit ist, dient.

Das mindestens eine Positionierhilfeelement 196 gibt vorzugsweise ein Signal, beispielsweise ein optisches Signal, ab und/oder aus, wenn sich der Energiespeicher 102 in einer Ladeposition und/oder in einer Entladeposition relativ zu der mobilen Kontaktiereinheit 144 befindet.

Beispielsweise liegt eine Ladeposition und/oder eine Entladeposition vor, wenn ein oder mehrere Kontaktbereiche 160 und/oder Kontaktelemente 162 der mobilen Kontaktiereinheit 144 teilweise oder vollständig, insbesondere flächig, an einem oder mehreren (nicht dargestellten) komplementär dazu ausgebildeten Kontaktbereichen und/oder Kontaktelementen des Energiespeichers 102 anliegen.

Das mindestens eine Positionierhilfeelement 196 ist vorzugsweise ein Schaltelement, mittels welchem ein Ladevorgang und/oder ein Entladevorgang des Energiespeichers 102 des Fahrzeugs gestartet und/oder freigeschaltet werden kann.

Beispielsweise umfasst das mobile Energiesystem 100 ferner mindestens ein Entladezustandsdetektierelement 198, welches einem Erkennen und/oder Detektieren eines entladenen Zustands der Energiespeichervorrichtung 104 dient. Das mindestens ein Entladezustandsdetektierelement 198 ist vorzugsweise so ausgebildet und/oder eingerichtet, dass es ein Signal, beispielsweise ein optisches Signal, abgibt und/oder ausgibt, wenn die Energiespeichervorrichtung 104 einen entladenen Zustand erreicht.

Beispielsweise ist das mindestens eine Entladezustandsdetektierelement 198 ein Schaltelement, mittels welchem ein Ladevorgang des Energiespeichers 102 durch die Energiespeichervorrichtung 104 und/oder ein Entladevorgang der Energiespeichervorrichtung 104 abschaltbar ist.

Ergänzend oder alternativ umfasst das mobile Energiesystem 100 mindestens ein Zustandsdetektierelement, mittels welchem ein entladener Zustand und/oder ein nicht ordnungsgemäßer Zustand des Energiespeichers 102 erkennbar und/oder detektierbar sind.

Das mindestens eine Zustandsdetektierelement dient vorzugsweise einer Erkennung und/oder Detektion eines entladenen Zustands und/oder eines nicht ordnungsgemäßen Zustands einer oder mehrerer Energiespeichereinheiten 110, beispielsweise einer Niedrigvoltenergiespeichereinheit und/oder einer Hochvoltenergiespeichereinheit, des Energiespeichers 102.

Bei einer Detektion eines entladenen Zustands einer oder mehrerer Energiespeichereinheiten 110 oder des Energiespeichers 102 als Ganzes wird beispielsweise ein Ladevorgang des jeweiligen Elements gestartet und/oder freigeschaltet.

Beispielsweise wird, insbesondere selbst, wenn das mindestens eine Positionierhilfeelement 196 eine ladebereite Position der mobilen Kontaktiereinheit 144 und des Energiespeichers 102 relativ zueinander detektiert, nur dann ein Ladevorgang des Energiespeichers 102 freigeschaltet, wenn das mindestens eine Zustandsdetektierelement einen ordnungsgemäßen Zustand erkennt oder detektiert.

Es kann vorgesehen sein, dass bei einer Detektion eines nicht ordnungsgemäßen Zustands einer oder mehrerer Energiespeichereinheiten 110 des Energiespeichers 102 oder des Energiespeichers 102 als Ganzes ein Entladevorgang des jeweiligen Elements gestartet und/oder freigeschaltet wird.

Mittels des mobilen Energiesystems 100 kann der Energiespeicher 102, insbesondere auch ein Energiespeicher 102, welcher Doppelschichtkondensator(en) umfasst, geladen und/oder entladen werden, ohne dass seine Lebensdauer hierdurch deutlich reduziert wird.

### Bezugszeichenliste

- 100: mobiles Energiesystem
- 102: Energiespeicher
- 104: Energiespeichervorrichtung
- 106: Entladevorrichtung
- 108: Basiseinheit
- 110: Energiespeichereinheit
- 112: Superkondensator
- 114: Akkumulator
- 116: Spannungswandlerelement
- 118: Gleichspannungswandler
- 120: Rolle
- 122: Schwerkraftrichtung
- 124: Gehäuse
- 126: Gestellvorrichtung
- 128: Außenseite
- 130: Boden
- 132: Oberseite
- 134: Bodenseite
- 136: Bodenelement
- 138: Führungsvorrichtung
- 140: Griffelement
- 142: Kontaktierelementaufnahme
- 144: Kontaktiereinheit
- 145: Bodenplatte
- 146: Kabelhalter
- 148: Ladekabel
- 150: Verbindungskabel
- 152: Anbindungselement
- 154: Unterseite
- 156: Oberseite
- 158: Unterschiebeeinheit
- 160: Kontaktbereich
- 162: Kontaktelement
- 164: Bedienseite
- 166: Anzeigevorrichtung
- 168: Anschaltelement
- 170: Abschaltelement
- 172: erste Spannungsmessvorrichtung
- 174: erstes Spannungsanzeigeelement
- 176: erste Strommessvorrichtung
- 178: erstes Stromanzeigeelement
- 180: zweite Spannungsmessvorrichtung
- 182: zweites Spannungsanzeigeelement
- 184: zweite Strommessvorrichtung
- 186: zweites Stromanzeigeelement
- 188: dritte Spannungsmessvorrichtung
- 190: drittes Spannungsanzeigeelement
- 192: dritte Strommessvorrichtung
- 194: drittes Stromanzeigeelement
- 196: Positionierhilfeelement
- 198: Entladezustandsdetektierelement

## Patentansprüche

1. Mobiles Energiesystem (100) zum Laden und/oder Entladen eines Energiespeichers (102) eines Fahrzeugs, wobei das mobile Energiesystem (100) eine Energiespeichervorrichtung (104) zum Speichern und/oder Bereitstellen von elektrischer Energie und/oder eine Entladevorrichtung (106) zum Entladen eines Energiespeichers (102) eines Fahrzeugs umfasst.

2. Mobiles Energiesystem (100) nach Anspruch 1, **dadurch gekennzeichnet, dass** das mobile Energiesystem (100) eine mobile Kontaktiereinheit (144) umfasst, mittels welcher die Energiespeichervorrichtung (104) mit dem Energiespeicher (102) des Fahrzeugs elektrisch kontaktierbar ist, wobei vorzugsweise die mobile Kontaktiereinheit (144) einen oder mehrere Kontaktbereiche (160) und/oder Kontaktelemente (162) aufweist, mittels welcher eine Spannung an den Energiespeicher (102) anlegbar und/oder eine Spannung von dem Energiespeicher (102) abgreifbar ist.

3. Mobiles Energiesystem (100) nach Anspruch 2, **dadurch gekennzeichnet, dass** die mobile Kontaktiereinheit (144) ein Steckerelement und/oder eine Bodenplatte (145), insbesondere zur Auflage auf einem Hallenboden und/oder Fußboden, umfasst oder daraus gebildet ist.

4. Mobiles Energiesystem (100) nach einem der Ansprüche 1 bis 3, **dadurch gekennzeichnet, dass** durch das mobile Energiesystem (100) zwei unterschiedliche Normbetriebsspannungen und/oder Ladespannungen, vorzugsweise gleichzeitig, bereitstellbar sind, wodurch beispielsweise eine Niedrigvoltenergiespeichereinheit des Energiespeichers (102) und eine Hochvoltenergiespeichereinheit des Energiespeichers (102), insbesondere gleichzeitig, ladbar und/oder entladbar sind.

5. Mobiles Energiesystem (100) nach einem der Ansprüche 2 bis 4, **dadurch gekennzeichnet, dass** die mobile Kontaktiereinheit (144) zwei oder mehr als zwei Paare von Kontaktbereichen (160) und/oder Kontaktelementen (162) aufweist, welche einer Bereitstellung unterschiedlicher Normbetriebsspannungen und/oder Ladespannungen dienen.

6. Mobiles Energiesystem (100) nach einem der Ansprüche 1 bis 5, **dadurch gekennzeichnet, dass** das mobile Energiesystem (100) mindestens ein Zustandsdetektierelement umfasst, mittels welchem ein entladener Zustand und/oder ein nicht ordnungsgemäßer Zustand des Energiespeichers (102), vorzugsweise ein entladener Zustand und/oder ein nicht ordnungsgemäßer Zustand einer oder mehrerer Energiespeichereinheiten (110) des Energiespeichers (102), erkennbar und/oder detektierbar sind.

7. Mobiles Energiesystem (100) nach einem der Ansprüche 1 bis 6, **dadurch gekennzeichnet, dass** das mobile Energiesystem (100) mindestens ein Entladezustandsdetektierelement (198) umfasst, mittels welchem ein entladener Zustand der Energiespeichervorrichtung (104) erkennbar und/oder detektierbar ist, wobei vorzugsweise das mindestens eine Entladezustandsdetektierelement (198) ein Schaltelement ist, mittels welchem ein Entladevorgang der Energiespeichervorrichtung (104) abschaltbar ist.

8. Mobiles Energiesystem (100) nach einem der Ansprüche 1 bis 7, **dadurch gekennzeichnet, dass** das mobile Energiesystem (100) ein oder mehrere Spannungswandlerelemente (116) zur Umwandlung einer von der Energiespeichervorrichtung (104) abgreifbaren Austrittsspannung und/oder einer an die Energiespeichervorrichtung (104) anlegbaren Eintrittsspannung umfasst.

9. Mobiles Energiesystem (100) nach Anspruch 8, **dadurch gekennzeichnet, dass** das eine oder die mehreren Spannungswandlerelemente (116) Gleichspannungswandler (118) sind.

10. Mobiles Energiesystem (100) nach Anspruch 9, **dadurch gekennzeichnet, dass** einer oder mehrere der Gleichspannungswandler (118) Spannungsvervielfacher sind, welche so ausgebildet und/oder eingerichtet sind, dass eine Austrittsspannung, welche von der Energiespeichervorrichtung (104) abgreifbar ist, vervielfacht wird.

11. Mobiles Energiesystem (100) nach einem der Ansprüche 1 bis 10, **dadurch gekennzeichnet, dass** das mobile Energiesystem (100) eine Anzeigevorrichtung (166) umfasst, welche insbesondere an einer parallel zu der Schwerkraftrichtung (122) angeordneten Bedienseite (164) eines Gehäuses (124) des mobilen Energiesystems (100) angeordnet ist, wobei die Anzeigevorrichtung (166) eines oder mehrere der folgenden Elemente umfasst:
- ein erstes Spannungsanzeigeelement (174) zur Anzeige einer Spannung bei einem Ladevorgang der Energiespeichervorrichtung (104) ;
- ein erstes Stromanzeigeelement (178) zur Anzeige eines Stroms bei einem Ladevorgang der Energiespeichervorrichtung (104);
- ein zweites Spannungsanzeigeelement (174) zur Anzeige einer Spannung bei einem Ladevorgang des Energiespeichers (102) durch die Energiespeichervorrichtung (104);
- ein zweites Stromanzeigeelement (178) zur Anzeige eines Stroms bei einem Ladevorgang des Energiespeichers (102) durch die Energiespeichervorrichtung (104);
- ein drittes Spannungsanzeigeelement (182) zur Anzeige einer Spannung bei einem Entladevorgang des Energiespeichers (102) durch die Entladevorrichtung (106); und
- ein drittes Stromanzeigeelement (178) zur Anzeige eines Stroms bei einem Entladevorgang des Energiespeichers (102) durch die Entladevorrichtung (106).

12. Mobiles Energiesystem (100) nach einem der Ansprüche 1 bis 11, **dadurch gekennzeichnet, dass** das mobile Energiesystem (100) mindestens ein Positionierhilfeelement (196) umfasst, welches vorzugsweise ein Signal ausgibt und/oder abgibt, wenn sich das Fahrzeug relativ zu dem mobilen Energiesystem (100) in einer Ladeposition und/oder in einer Entladeposition befindet.

13. Mobiles Energiesystem (100) nach einem der Ansprüche 1 bis 12, **dadurch gekennzeichnet, dass** das mobile Energiesystem (100) eine Basiseinheit (108) aufweist, welche, vorzugsweise mittels mehrerer Rollen (120), verfahrbar ist, wobei beispielsweise eine oder mehrere der Rollen (120) so ausgebildet sind, dass sie frei drehbar und/oder einzeln blockierbar sind.

14. Mobiles Energiesystem (100) nach einem der Ansprüche 1 bis 13, **dadurch gekennzeichnet, dass** das mobile Energiesystem (100) ein, beispielsweise zumindest näherungsweise quaderförmiges, Gehäuse (124) aufweist, welches einen Innenraum umgibt und/oder einen Bestandteil einer Basiseinheit (108) des mobilen Energiesystems (100) bildet, wobei vorzugsweise die Energiespeichervorrichtung (104) in dem Innenraum des Gehäuses (124) angeordnet ist.

15. Mobiles Energiesystem (100) nach einem der Ansprüche 1 bis 14, **dadurch gekennzeichnet, dass** das mobile Energiesystem (100) eine Gestellvorrichtung (126) umfasst, welche insbesondere ein Gehäuse (124) des mobilen Energiesystems (100) in Schwerkraftrichtung (122) gesehen von unten aufnimmt und/oder an welcher mehrere Führungsvorrichtungen (138) zur Aufnahme und/oder Führung jeweils einer Rolle (120) des mobilen Energiesystems (100) festgelegt sind.

16. Mobiles Energiesystem (100) nach einem der Ansprüche 1 bis 15, **dadurch gekennzeichnet, dass** die Entladevorrichtung (106) eine Steuervorrichtung umfasst, mittels welcher eine Entladestromstärke während des Entladens des Energiespeichers (102) des Fahrzeugs beeinflussbar, insbesondere zumindest näherungsweise und/oder zumindest abschnittsweise konstant haltbar, ist.
